# EUROPÄISCHE PATENTSCHRIFT

(11) **EP 0 920 358 B1**
(45) Veröffentlichungstag und Bekanntmachung des Hinweises auf die Patenterteilung: **24.05.2006**
(21) Anmeldenummer: 98919225.7
(22) Anmeldetag: 07.04.1998
(51) Int. Cl.: B08B 9/28, G01P 13/00

(54) **VERFAHREN UND VORRICHTUNG ZUR KONTROLLE DER INNENRAUMBEHANDLUNG VON FLASCHEN ODER DGL.**
METHOD AND DEVICE FOR CONTROLLING PROCESSING OF THE INSIDE AREAS OF BOTTLES OR THE LIKE
PROCEDE ET DISPOSITIF POUR CONTROLER LE TRAITEMENT DE L'ESPACE INTERIEUR DE BOUTEILLES OU ANALOGUE

(30) Priorität: 07.04.1997 DE 19714249
(43) Veröffentlichungstag der Anmeldung: 09.06.1999
(73) Patentinhaber: KRONES AKTIENGESELLSCHAFT HERMANN KRONSEDER MASCHINENFABRIK, 93068 Neutraubling (DE)
(72) Erfinder: ZIEGLER, Manfred, D-94161 Ruderting (DE); PLSCHEK, Klaus, D-93086 Wörth (DE)
(86) Internationale Anmeldenummer: PCT/EP1998/002002
(87) Internationale Veröffentlichungsnummer: WO 1998/045060

(56) Entgegenhaltungen:
- EP-A- 0 128 708
- DE-A- 4 036 950
- DE-A- 4 232 323
- DE-A- 4 427 577
- DE-C- 3 722 059
- US-A- 2 970 561
- PATENT ABSTRACTS OF JAPAN vol. 96, no. 8, 30.August 1996 -& JP 08 108160 A (S R L K.K.), 30.April 1996,

## Beschreibung

Die Erfindung betrifft ein Verfahren gemäß dem Oberbegriff des Anspruchs 1 und eine Vorrichtung gemäß dem Oberbegriff des Anspruch 12 zur Durchführung des Verfahrens.

Üblicherweise werden Flaschen oder dgl. Behälter vor ihrer Befüllung mit einem flüssigen Lebensmittel oder anderen Produkten mehreren Vorbehandlungsschritten, vor allem einer gründlichen Reinigung und ggf- Sterilisierung, unterzogen. Zur Verbesserung der mikrobiologischen Qualität abgefüllter flüssiger Lebensmittel ist es bekannt, die Flaschen vor dem Befüllen thermisch zu sterilisieren, um evtl. vorhandene, für das jeweilige Lebensmittel schädlichen Keime abtöten zu können. Dies erfolgt im allgemeinen durch Einleiten von Dampf oder Heißwasser bzw. überhitztem Wasser in die zu sterilisierende Flasche mittels einer Spritzdüsen aufweisenden Sterilisationseinrichtung, die in der Regel als eigenständige Maschine einer Füllmaschine vorgeordnet oder in Einzelfällen in die Füllmaschine integriert ist. Ein fehlerhafter Verfahrensablauf kann jedoch nicht gänzlich ausgeschlossen werden. So kann beispielsweise durch Versagen von Steuerventilen oder zu geringem Druck eine unzureichende oder gänzlich fehlende Keimabtötung in der zu sterilisierenden Flasche stattfinden.

JP-A-08108160 offenbart eine Vorrichtung zur Kontrolle einer Reinigungsvorrichtung, in der der Fluidzulauf zu einer Austrittsöffnung durch zwei in Flussrichtung beabstandete Kontakte feststellbar ist. Der Einsatzbereich dieser vorrichtung ist somit auf elektrisch leitfähige Fluide beschränkt. Weit verbreitete Reinigungsmedien, wie z. B. Sterilluft, Sterilwasser oder Dampf sind damit nicht erfassbar.

Aus DE-A-4 427 577 ist eine Sensoren aufweisende Kontrollvorrichtung bekannt, mit der in Flaschen ein Nebel als Nachweis einer erfolgten Innenraumbehandlung erfasst werden soll. Problematisch ist hierbei die Beeinflussung von Messungen durch die individuellen, stark voneinander abweichenden Eigenschaften von Flaschen.

US-A-2 970 561 offenbart eine Vorrichtung nach dem Schwebekörperprinzip. Ein in einem senkrechten, mit einem Sichtfenster versehenen Rohrgehäuse beweglich gelagerter Schwebekörper weist eine Markierung auf; ebenso das Rohrgehäuse selbst. Eine Kontrollvorrichtung zur Abtastung der Stellung des Schwebekörpers ist nicht vorhanden.

Aus der DE 42 32 323 A1 ist eine Vorrichtung zur Überwachung der Wärmebehandlung von Flaschen bei einer Flaschenbehandlungsmaschine bekannt. Hierbei ist ein erster Sensor vorgesehen, der die an der Außenfläche der Flasche abgegebene Wärmestrahlung nach der Sterilisation misst. Im Einlaufbereich der Flaschen, vor Erreichen der Sterilisationseinrichtung, passieren die Flaschen einen zweiten, ebenso nach dem Pyrometerprinzip arbeitenden Sensor. Eine Steuerelektronik mit der der erste und zweite Sensor verbunden sind, stellt fest, ob die vom ersten Sensor gemessene Temperatur für eine ausreichende Sterilisation genügt. Ein derartiges Messsystem erfordert einen großen apparativen Aufwand, so dass hohe Herstellkosten gegeben sind. Außerdem ist die Temperaturerhöhung an der Außenseite der Flaschen nach einer Bedampfungszeit von nur ein bis zwei Sekunden äußerst gering und messtechnisch nur schwer zu erfassen. Erfolgt die Flaschenbehandlung mit Gas oder chemischen Mitteln, z.B. ozonisiertem Wasser, deren Temperatur nicht oder nur unwesentlich höher ist als die Flaschentemperatur zu Beginn der Behandlung, so ist die bekannte Temperaturkontrolleinrichtung zum Überwachen des Sterilisationsvorganges völlig ungeeignet, weil in diesem Fall keine erfassbare Temperaturerhöhung der Flaschenwandung auftritt.

Es ist Aufgabe der vorliegenden Erfindung, ein demgegenüber zuverlässigeres und vereinfachtes Verfahren und eine entsprechende Vorrichtung zur Kontrolle der Innenraumbehandlung von Flaschen anzugeben.

Gelöst wird die Aufgabe, indem das Vorhandensein des Fluidstrahls im Bereich nach der Austrittsöffnung und/oder der Fluidzulauf zur Austrittsöffnung der Spritzdüsen kontrolliert wird.

Weist die das Behandlungsfluid abgebende Düse in der Betriebsphase einen Abstand zur Flaschenmündung auf, kann der aus der Düsenöffnung austretende Fluidstrahl im Bereich zwischen der Flaschenmündung und der Düsenöffnung von einer Sensoreinrichtung unmittelbar erkannt und kontrolliert werden. Mit einem Laserstrahl kann z.B. ein Dampf- oder Flüssigkeitsstrahl zuverlässig erfaßt werden. Es versteht sich, dass die Art der zu verwendenden Kontrolleinrichtung auch von dem zum Einsatz kommenden Fluidtyp abhängt.

Ist zum Behandeln des Flascheninnenraums eine sogenannte "eintauchende Düse" notwendig, d.h. die Düsenaustrittsöffnung befindet sich im Moment der Fluidabgabe hinter der Flaschenmündung im Flascheninnenraum, so kann zum Nachweis der Innenraumbehandlung der Fluidzulauf zur Austrittsöffnung der Düse auf einfache Weise überprüft werden, indem beispielsweise die Stellung eines in der Zulaufleitung beweglich gelagerten Drossel- bzw. Widerstandkörpers durch eine Kontrolleinrichtung abgefragt wird. Diese Kontrollmethode ist besonders bei einem gasförmigen Behandlungsfluid (Sterilluft, CO₂) von Vorteil, weil hier die zuvor genannte direkte Strahlerfassung unter Umständen einen höheren sensorischen Aufwand erfordern würde. Es versteht sich, dass die Fluidzulaufkontrolle nicht nur auf Anwendungsfälle mit eintauchenden Düsen beschränkt ist, sondern gerade bei einem gas- oder dampfförmigen Behandlungsfluid auch für Düsen geeignet ist, bei denen eine direkte Strahlkontrolle aufgrund eines Abstandes der Düsenaustrittsöffnung zur Flaschenmündung möglich wäre.

Überwiegend befinden sich bei den in der Praxis zum Einsatz kommenden Maschinen zur Flascheninnenraumbehandlung, z.B. Rinser, eine Vielzahl von Düsen mit einem gleichmäßigen Teilungsabstand versetzt zueinander an einem antreibbaren Träger, so dass die Düsen über eine bestimmte Wegstrecke synchron mit der Flaschenbewegung mitgeführt werden, wobei sich die Flaschen während der Innenraumbehandlung in der Regel in einer Stellung befinden, in der die Flaschenmündung nach unten weist, während der Fluidstrahl von unten nach oben in Richtung zum Flaschenboden in den Innenraum eingeleitet wird.

Im Idealfall kann jeder Düse eine mitlaufende Sensoreinrichtung zur direkten Fluidstrahl- und/oder Fluidzulaufkontrolle zugeordnet werden, wodurch günstigerweise der gesamte Behandlungsprozess über seine volle Zeitdauer überprüfbar ist. Aber auch mit stationär an der Düsenumlaufbahn positionierten Sensoreinrichtungen ist für viele Anwendungsfälle eine ausreichende und zuverlässige Kontrolle der Innenraumbehandlung von Flaschen oder dgl. mit geringem Aufwand möglich. Mit geeigneten Mitteln wird dann der Zustand der Sensoren im Moment des Passierens einer Düse an der Stelle, wo die Fluidbehandlung stattfinden sollte, abgefragt und ausgewertet, wobei die Sensorabfrage z.B. in Abhängigkeit der Drehwinkellage eines die Düsen tragenden Rinserrotors erfolgt, oder eine zeit- und/oder wegabhängige Triggerung der Sensorabfrage mit Hilfe bestimmter, in regelmäßigen Abständen am Rinser angeordneten Bauteilen (z.B. Düsen- oder Flaschenhalterteile) unter Berücksichtigung der momentanen Maschinengeschwindigkeit vorgenommen wird. Zur Erkennung solcher Bauteile können die Sensoren selbst herangezogen werden, so dass nicht unbedingt zusätzliche Triggersensoren vorgesehen werden müssen.

Diese Lösung mit stationären Sensoreinrichtungen ist auch ohne weiteres zur Kontrolle von Behandlungsprozessen mit mehrfach, ggf. nacheinander mit verschiedenen Fluidtypen, erfolgender Fluidbehandlung der Flaschen geeignet. Es ist lediglich dafür Sorge zu tragen, dass in jedem Behandlungsbereich, wo eine Fluidbeaufschlagung einer Flasche erfolgen soll, an der Düsenumlaufbahn jeweils wenigstens eine Sensoreinrichtung vorgesehen wird.

In der Regel erfolgt im Anschluß an die Flascheninnenraumbehandlung die Befüllung einer Flasche mit dem vorgesehenen Füllgut, z.B. einem Getränk. Dazu wird eine behandelte Flasche vom Rinser zu einer Füllmaschine überführt. Dieser Transfer kann mit einem Förderband oder Sternrädern erfolgen. Speziell wenn die Befüllung der Flasche unter sterilen oder aseptischen Bedingungen in der Füllmaschine vonstatten gehen muß, ist es sehr vorteilhaft, wenn Flaschen, deren Innenraumbehandlung durch Sensoren als nicht ordnungsgemäß erkannt worden ist, so dass noch schädliche Keime, Sporen, Pilze etc. vorhanden sein können, noch vor der Füllmaschine ausgesondert werden, um eine Infektion des Sterilbereiches zu verhindern. Diese Maßnahme ist unabhängig davon, welche Art von Sensoren zur Kontrolle der Innenraumbehandlung zum Einsatz kommen, vorteilhaft. Zum Ausschleusen beanstandeter Flaschen kann beispielsweise ein Transfersternrad mit selektiv ansteuerbaren Halteorganen, z.B. Greifklammern, verwendet werden, wobei die Ansteuerung in Abhängigkeit der Signale der Auswerteinrichtung erfolgt, die aus der Abfrage der Sensoreinrichtungen eine fehlerhaft behandelte Flasche erkennt und ein Fehler- bzw. Ausscheidesignal erzeugt.

Weitere vorteilhafte Ausgestaltungen der Erfindung sind in den Unteransprüchen angegeben.

Nachfolgend werden Ausführungsbeispiele der Erfindung anhand der Figuren erläutert. Es zeigt:
- Fig. 1: einen schematischen Vertikalschnitt durch die äußere Peripherie eines Rinsers mit einer Flasche in der Behandlungsstellung und einer Kontrolleinrichtung entsprechend einer ersten Ausführung,
- Fig. 2: einen schematischen Vertikalschnitt durch die äußere Peripherie eines Rinsers mit einer Flasche in der Behandlungsstellung und einer Kontrolleinrichtung entsprechend einer zweiten Ausführung und
- Fig. 3: einen Rinser mit einer nachgeordneten Füllmaschine in einer schematischen Draufsicht.

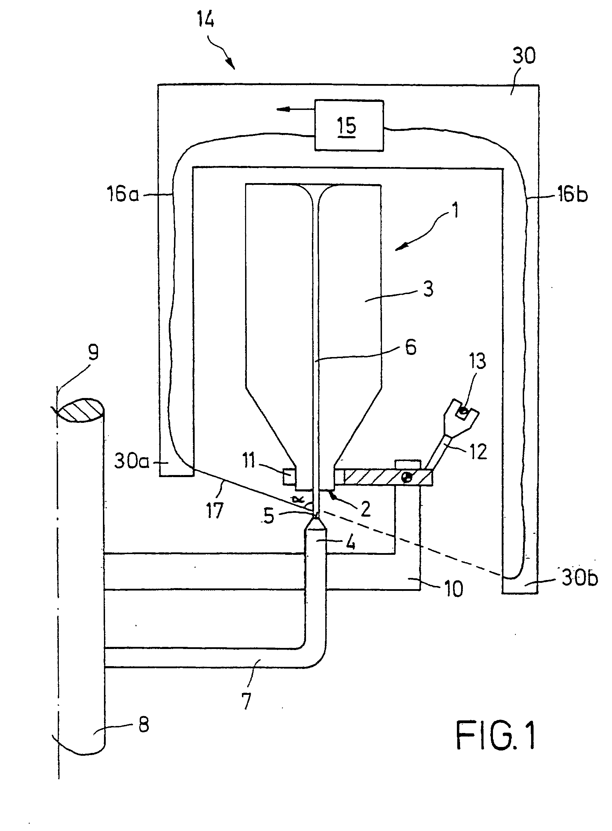

Die in Fig. 1 in der Behandlungsstellung abgebildete Flasche 1 wird von einer Greifzange 11, z.B. aus elastischem Kunststoff bestehend, mit der Flaschenmündung 2 nach unten weisend gehalten. Die Greifzange 11 ist schwenkbar an einem L-förmigen Träger 10 gelagert, der mit seinem radial inneren Ende an einem um eine Rotordrehachse 9 umlaufend angetriebenen Rotor 8 befestigt ist. Die Stellung der schwenkbaren Greifzange 11 wird durch einen mit dieser verbundenen Gabelkopf 12 bestimmt, der ein geschlitztes Ende aufweist, welches eine entsprechend dem gewünschten Schwenkprogramm gebogene Steuerstange 13 mit Spiel umfaßt. Ebenfalls am Rotor 8 ist unterhalb der Flaschenmündung 2 mittels einer Zulaufleitung 7 eine eine Düsenaustrittsöffnung 5 aufweisende Düse 4 befestigt, derart, dass ein aus der Düsenaustrittsöffnung 5 nach oben spritzender Fluidstrahl 6 die Flaschenmündung 2 in etwa konzentrisch passiert und in den Flascheninnenraum 3 eindringt, wobei zwischen der Flaschenmündung 2 und der Düsenaustrittsöffnung 5 ein Abstand vorhanden ist. Die Fluidzuführung von einem im Rotor 8 angeordneten, nicht dargestellten Drehverteiler über die Zulaufleitung 7 zur Düsenaustrittsöffnung 5 wird in an sich bekannter Weise durch Steuerschlitze eines nicht dargestellten Drehschiebers oder durch ebenfalls nicht dargestellte Ventile gesteuert.

Ferner ist eine mit einem U-förmigen Gehäuse 30 dargestellte Kontrolleinrichtung 14 vorhanden, wobei sich die Basis des Gehäuses oberhalb der Flasche 1 befindet und sich zwei verschieden lange, vertikale Schenkel 30a, 30b nach unten bis in Höhe der Düsenaustrittsöffnung 5 erstrecken. In der Basis befindet sich ein Sender-Empfänger-Auswertgerät 15, das über einen ersten Lichtwellenleiter 16a einen quer zum Fluidstrahl 6 verlaufenden Laserlichtstrahl 17 aussenden kann, der -wenn keine Unterbrechung erfolgt- von einem zweiten, gegenüberliegenden Lichtwellenleiter 16b aufgefangen und zu dem im Auswertgerät 15 angeordneten Empfänger zurückgeführt wird. Ist der Fluidstrahl 6 vorhanden, wird der Laserlichtstrahl 17 unterbrochen, oder bei einem durchleuchtbaren Fluid wie Sterilwasser aufgrund seines Neigungswinkels α durch Doppelbrechung so abgelenkt, dass er vom zweiten Lichtwellenleiter 16b nicht mehr aufgefangen wird. Besonders günstig ist ein Neigungswinkel a im Bereich zwischen 50 bis 60 Grad. Die zu der Kontrolleinrichtung 14 gehörenden Teile können wahlweise stationär angeordnet sein - oder jeweils einer Düse 4 zugeordnet- mit dieser umlaufen, indem das Gehäuse der Kontrolleinrichtung 14 beispielsweise an dem kontinuierlich umlaufenden Träger 10 befestigt wird.

Bei der stationären Ausführung der Kontrolleinrichtung 14 erfolgt die Abfrage des Empfängereingangs des Auswertgeräts 15 in dem Augenblick, wo der aus der Austrittsöffnung 5 austretende Fluidstrahl 6 den Laserstrahl 17 passieren müßte. Wenn nun von der Düse 4 ordnungsgemäß ein Fluidstrahl 6 abgegeben wird, erfolgt eine Unterbrechung bzw. Ablenkung des aus dem Lichtleiter 16a austretenden Laserstrahls 17 (siehe Fig. 1). Ist jedoch in diesem Moment kein Fluidstrahl 6 vorhanden, kann der Laserstrahl 17 den Spalt zwischen der Flaschenmündung 2 und der Düsenaustrittsöffnung 5 ungehindert passieren, wird vom zweiten Lichtwellenleiter 16b aufgefangen und zum Empfänger des Auswertgeräts 15 geleitet, das daraufhin ein Fehlersignal zum Aussondern der entsprechenden Flasche 1 ausgibt.

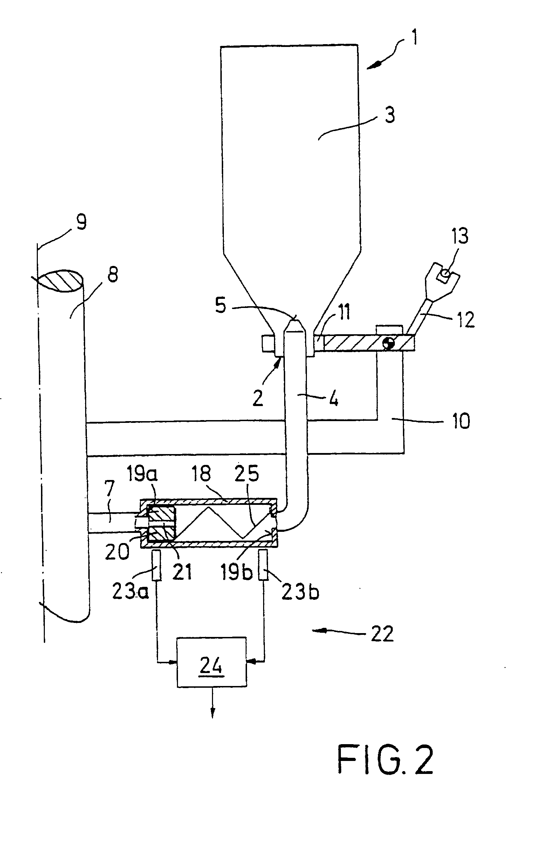

Das in der Fig. 2 abgebildete zweite Ausführungsbeispiel unterscheidet sich von dem vorhergehenden (Fig. 1) durch eine andere Kontrolleinrichtung 22, mit der die Fluidzufuhr in der zur Düsenaustrittsöffnung 5 führenden Zulaufleitung 7 überprüfbar ist. Zu diesem Zweck besitzt die Zulaufleitung 7 einen Rohrabschnitt 18, in dem ein eine Innenbohrung 21 aufweisender Drosselkörper 20 zwischen zwei beabstandeten Anschlägen 19a und 19b axial beweglich geführt ist. Durch eine Druckfeder 25 wird der Drosselkörper 20 in Richtung zum ersten Anschlag 19a beaufschlagt. An der Außenseite des Rohrabschnitts 18 befinden sich zwei Sensoren 23a und 23b, wobei der erste Sensor 23a nahe dem ersten Anschlag 19a und der zweite Sensor 23b im Bereich des zweiten Anschlags 19b angeordnet ist. Beide Sensoren 23a und 23b sind mit einem Steuer- und Auswertgerät 24 verbunden. Im vorliegenden Ausführungsfall besteht der Rohrabschnitt 18 z.B. aus einem Kunststoffmaterial, der Drosselkörper 20 dagegen aus Edelstahl. Als Sensoren können in diesem Fall Näherungsinitiatoren verwendet werden.

Erfolgt keine Fluidzufuhr durch die Zulaufleitung 7, liegt der Drosselkörper 20 infolge der Kraftbeaufschlagung durch die Druckfeder 25 am ersten Anschlag 19a an, wodurch der erste Näherungsinitiator 23a belegt ist. Wird nun zum Ausspritzen des Flascheninnenraumes 3 durch die Zulaufleitung 7 Fluid in Richtung zur Düsenaustrittsöffnung 5 zugeführt, so wird der Drosselkörper 20 vom Anschlag 19a abgehoben und in Richtung zum zweiten Anschlag 19b verschoben, weil der Querschnitt der Innenbohrung 21 kleiner ausgeführt ist als der lichte Querschnitt der zum Rohrstück 18 führenden Zulaufleitung 7. Liegt in der Zulaufleitung 7 der ordnungsgemäße Fluiddruck vor, so erreicht der Drosselkörper 20 die durch den zweiten Anschlag 19b definierte Endlage gegen den Widerstand der Druckfeder 25, wobei der zweite Näherungsinitiator 23b belegt wird, während in dieser Position der erste Näherungsinitiator 23a nicht mehr belegt ist.

Wird nun in diesem Augenblick, währenddem der Ausspritzvorgang stattfinden sollte, die Belegung der Initiatoren 23a und 23b durch das Auswertgerät 24 abgefragt, so wird aus der Belegung des zweiten Näherungsinitiators 23b die ordnungsgemäße Funktion der Düse 4 abgeleitet, d.h. es wird ein Fluidstrahl 6 in den Flascheninnenraum 3 abgegeben. Ist dagegen in diesem Augenblick keiner der beiden Initiatoren 23 belegt, so befindet sich der Drosselkörper 20 infolge eines zu geringen Fluiddrucks in einer Position zwischen den beiden Initiatoren, so dass ein Fehlersignal vom Auswertgerät 24 ausgegeben wird, weil davon ausgegangen werden muß, dass der aus der Düsenaustrittsöffnung 5 ausströmende Fluidstrahl 6 wegen des zu geringen Drucks unter Umständen den Flaschenboden nicht erreicht, und dieser dadurch nicht ausreichend gereinigt bzw. sterilisiert wird. Befindet sich der Drosselkörper 20 im Moment der Abfrage im Bereich des Initiators 23a, ist keine ausreichende Fluidzufuhr durch die Zulaufleitung 7 vorhanden, so dass ebenfalls ein Fehlersignal abgegeben wird.

Zum Nachweis der Spritzfunktion der Düse 4 kann auch nur einer der beiden Initiatoren 23a oder 23b genügen.

Das Rohrstück 18 kann abweichend von der Darstellung in Fig. 2 auch im vertikal verlaufenden Abschnitt der Zulaufleitung 7 angeordnet sein.

Ähnlich wie bei dem ersten Ausführungsbeispiel nach Fig. 1 können die Sensoren 23a, 23b und das Auswertgerät 24 wahlweise stationär oder mit der Düse 4 mitlaufend angeordnet werden.

Das in der Fig. 2 dargestellte Ausführungsbeispiel eignet sich besonders im Falle einer sogenannten "eintauchenden Düse", d.h. für Anwendungen, bei denen sich die Düsenaustrittsöffnung 5 einer Düse 4 während der Spritzphase im Innenraum 3 der Flasche befindet. Ferner ist diese Ausführung auch dann besonders vorteilhaft, wenn zum Ausspritzen bzw. Ausblasen der Flaschen 1 ein gas- oder dampfförmiges Fluid, wie z.B. Sterilluft, CO₂, Aerosole oder Sattdampf eingesetzt wird.

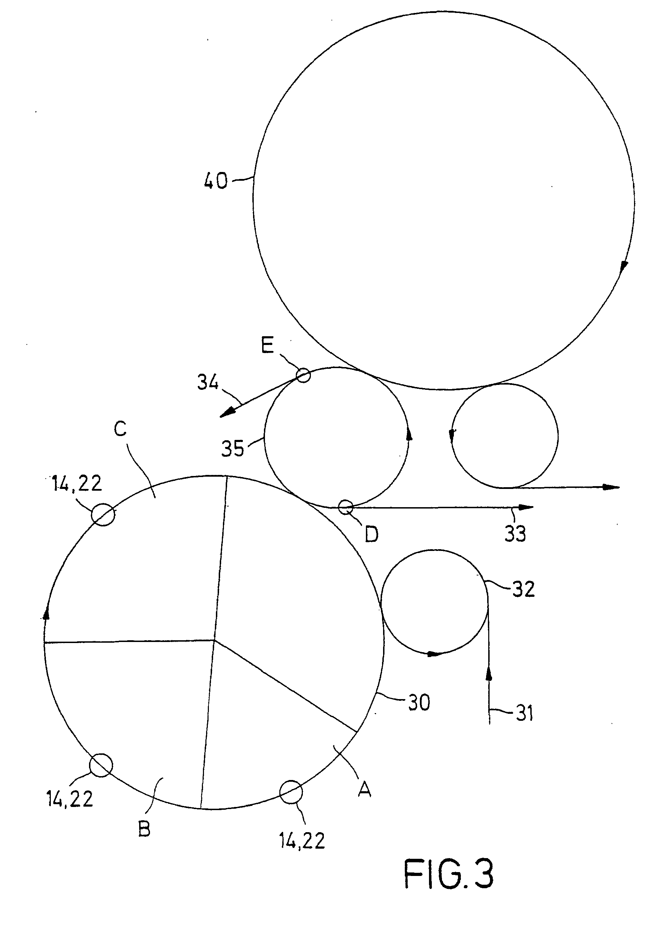

In der Fig. 3 ist in einer Draufsicht das Karussell eines Rinsers durch einen Kreis 30 und ein Füllerkarussell durch einen Kreis 40 angedeutet. Dazwischen befindet sich ein Transfersternrad 35, welches an seinem Umfang mit in an sich bekannter Weise steuerbaren Halteorganen, z.B. Greifzangen, ausgestattet ist. Die zu behandelnden Flaschen werden von einem Förderer 31 einem Einlaufsternrad 32 zugeführt, das diese an das Rinserkarussell 30 übergibt. Danach werden die Flaschen vom Rinser in an sich bekannter Weise um ca. 180 Grad geschwenkt, bis die Flaschenmündung nach unten weist. In dieser Stellung durchfährt jede Flasche beispielsweise drei aufeinanderfolgende Behandlungssektoren A, B und C, wobei der Innenraum jeder Flasche beim Durchfahren dieser Sektoren mit einem anderen Fluid beaufschlagt wird. Um die ordnungsgemäße Innenraumbehandlung der einzelnen Flaschen in den drei Sektoren A, B, C überprüfen zu können, befindet sich in jedem der Sektoren an der Umlaufbahn des Rinserkarussells 30 beispielsweise eine stationär angeordnete Kontrolleinrichtung 14 nach Fig. 1 oder 22 nach Fig. 2. Nach dem Verlassen des letzten Sektors C werden die Flaschen noch vor dem Erreichen des Transferrades 35 in ihre ursprüngliche Lage zurückgeschwenkt und dann an dieses übergeben.

An der Umlaufbahn des Transfersternrades 35 befinden sich beispielsweise an den mit D und/oder E bezeichneten Stellen Abförderer 33 bzw. 34, die zum Abführen von nicht ordnungsgemäß behandelten Flaschen dienen, d.h. die einzeln ansteuerbaren Halteorgane des Tranfersternrades 35 können bei der Position D oder E die unbrauchbaren Flaschen freigeben und dadurch aussondern.

Auf diese Weise wird sichergestellt, dass nur einwandfrei behandelte Flaschen an das sich beispielsweise in einer sterilen Einhausung befindende Füllerkarussell 40 abgegeben werden. Dadurch kann vorteilhafterweise eine Kontamination des Füllers und seiner Umgebung vermieden werden.

## Patentansprüche

1. Verfahren zur Kontrolle der mit einem Fluid erfolgenden Innenraumbehandlung von Flaschen oder dgl., wobei die Einleitung des Fluids in den Innenraum mittels einer eine Austrittsöffnung aufweisenden Düse erfolgt, **dadurch gekennzeichnet, dass** das Vorhandensein des Fluidstrahls im Bereich nach der Austrittsöffnung mittels einer Kontrolleinrichtung und/oder der Fluidzulauf zur Austrittsöffnung durch einen in der Fluidzuleitung bewegbaren Drosselkörper mit einer zugeordneten Kontrolleinrichtung kontrolliert wird.

2. Verfahren nach Anspruch 1, **dadurch gekennzeichnet, dass** die Kontrolle des Fluidstrahls und/oder des Fluidzulaufs berührungslos erfolgt.

3. Verfahren nach Anspruch 1 oder 2, **dadurch gekennzeichnet, dass** die Austrittsöffnung beim Einleiten des Fluids in den Innenraum einer Flasche oder dgl. einen Abstand zur Innenraumeintrittsöffnung aufweist und in diesem Abstandsbereich das Vorhandensein des Fluidstrahls kontrolliert wird, vorzugsweise auf optischem Wege, insbesondere mit einem Lichtstrahl.

4. verfahren nach Anspruch 3, **dadurch gekennzeichnet, dass** der Lichtstrahl mit einem von 90 Grad abweichenden Winkel α quer zum Fluidstrahl ausgerichtet ist.

5. verfahren nach Anspruch 1 oder 2, **dadurch gekennzeichnet, dass** die Fluidbewegung in der Zulaufleitung vor der Austrittsöffnung durch einen in der zulaufleitung axial beweglich geführten Drosselkörper erfasst und dessen Stellung kontrolliert wird.

6. verfahren nach wenigstens einem der vorhergehenden Ansprüche 1 bis 5, **dadurch gekennzeichnet, dass** der Innenraum einer Flasche oder dgl. während eines Behandlungszyklusses mehrmals mit einem Fluid, insbesondere unterschiedlicher Art, beaufschlagt wird und bei jeder Fluideinleitung das Vorhandensein des Fluidstrahls und/oder des Fluidzulaufs kontrolliert wird.

7. verfahren nach wenigstens einem der Ansprüche 1 bis 6, **dadurch gekennzeichnet, dass** bei Ausbleiben des Fluidstrahls und/oder Fluidzulaufs von einer Kontrolleinrichtung ein Signal ausgegeben wird.

8. Verfahren nach wenigstens einem der Ansprüche 1 bis 7, **dadurch gekennzeichnet, dass** die Flaschen oder dgl. zur Innenraumbehandlung mit der Eintrittsöffnung nach unten weisend gehalten werden und der Fluidstrahl von unten nach oben gerichtet in den Innenraum strömt.

9. Verfahren nach wenigstens einem der vorhergehenden Ansprüche 1 bis 8, **dadurch gekennzeichnet, dass** es bei einem Rinser, insbesondere nach kontinuierlich umlaufender Bauart, angewendet wird.

10. Verfahren nach wenigstens einem der vorhergehenden Ansprüche 1 bis 9, **dadurch gekennzeichnet, dass** durch die Fluidbehandlung der Innenraum einer Flasche oder dgl. sterilisiert wird.

11. verfahren nach wenigstens einem der Ansprüche 1 bis 10, **dadurch gekennzeichnet, dass**, wenn die Kontrolle der Innenraumbehandlung einer Flasche o.dgl. ein nicht ausreichendes Behandlungsresultat ergibt, die entsprechende Flasche nicht einem darauffolgenden Füllprozess zugeführt wird, insbesondere wenn der Füllprozess unter sterilen oder aseptischen Bedingungen erfolgen soll, sondern vorher ausgeschieden wird.

12. Vorrichtung zur Kontrolle der mit einem Fluid erfolgenden Innenraumbehandlung von Flaschen (1) oder dgl., wobei die Einleitung des Fluids (6) in den Innenraum (3) mittels einer eine Austrittsöffnung (5) aufweisenden Düse (4) erfolgt, insbesondere zum Ausführen des Verfahrens nach wenigstens einem-der Ansprüche 1 bis 11, **dadurch gekennzeichnet, dass** das Vorhandensein des Fluidstrahls (6) im Bereich nach der Austrittsöffnung (5) und/oder durch einen Drosselkörper (20) der Fluidzulauf zur Austrittsöffnung (5) von einer Kontrolleinrichtung (14, 22) überwacht wird.

13. vorrichtung nach Anspruch 12, **dadurch gekennzeichnet, dass** die Überwachung durch berührungslos arbeitende Sensoren (16a, 16b, 23a, 23b) erfolgt.

14. Vorrichtung nach Anspruch 13, **dadurch gekennzeichnet, dass** die Sensoren Lichtschranken (16a, 16b) und/oder Näherungsinitiatoren (23a, 23b) sind.

15. Vorrichtung nach einem der Ansprüche 12 bis 14, **dadurch gekennzeichnet, dass** die Flaschen (1) mittels einer Transportvorrichtung (10, 11) kontinuierlich förderbar sind und die Sensoren (16a, 16b, 23a, 23b) stationär an der Flaschenförderbahn (30) angeordnet sind.

16. Vorrichtung nach Anspruch 15, **dadurch gekennzeichnet, dass** die Kontrolleinrichtung (14, 22) beim Passieren der Sensoren (16a, 16b, 23a, 23b) durch eine vorbeilaufende Flasche eine Signalabfrage der Sensoren durchführt und bei Nichtvorhandensein eines Fluidstrahls oder Fluidzulaufs ein Fehlersignal abgibt.

17. Vorrichtung nach Anspruch 16, **dadurch gekennzeichnet, dass** durch das Fehlersignal eine Flaschenausschleusvorrichtung (35) zum Aussondern einer nicht oder unzureichend behandelten Flasche ansteuerbar ist.

18. vorrichtung nach Anspruch 17, **dadurch gekennzeichnet, dass** die Flaschenausschleusvorrichtung (35) im Bereich vor einer Füllmaschine (40), insbesondere Sterilfüllmaschine, angeordnet ist.

19. vorrichtung nach wenigstens einem der Ansprüche 15 bis 18, **dadurch gekennzeichnet, dass** die Flaschen von der Transportvorrichtung (10, 11) zur Innenraumbehandlung aus einer aufrechten Stellung in eine mit der Mündung (2) im wesentlichen nach unten gerichtete Position schwenkbar sind, in der sich die Mündung (2) konzentrisch zu einer nach oben gerichteten Düse (4) befindet.

20. Vorrichtung nach wenigstens einem der Ansprüche 12 bis 19, **dadurch gekennzeichnet, dass** die Düse (4) und die Mündung (2) einer Flasche (1) während der Innenraumbehandlung einen Zwischenraum aufweisen und im Bereich des Zwischenraumes das Vorhandensein des Fluidstrahls (6) durch den wenigstens einen Sensor (16a, 16b) erfassbar ist, insbesondere durch einen den Fluidstrahl (6) kreuzenden Lichtstrahl (17).

21. Vorrichtung nach Anspruch 20, **dadurch gekennzeichnet, dass** die Sensoren (16a, 16b) so angeordnet sind, dass der Lichtstrahl (17) den Fluidstrahl (6) mit einem von 90 Grad abweichenden Winkel (α) quer zur Förderrichtung kreuzt.

22. Vorrichtung nach wenigstens einem der Ansprüche 12 bis 21, **dadurch gekennzeichnet, dass** die Sensoren (16a, 16b) in oder an einem zwei mit Abstand parallel verlaufende Schenkel (30a, 30b) aufweisenden Gehäuse (30) angeordnet sind und die Flaschen zwischen den Schenkeln hindurchführbar sind.

23. Vorrichtung nach Anspruch 22, **dadurch gekennzeichnet, dass** das Gehäuse (30) im wesentlichen U-förmig ausgebildet ist und die Schenkel (30a, 30b) ungleich lang sind.

24. vorrichtung nach wenigstens einem der Ansprüche 12 bis 19, **dadurch gekennzeichnet, dass** an der Bewegungsbahn der Düsen (4) im Bereich deren Fluidzuleitung (7) Sensoren (23a, 23b) zum Erfassen des Fluidzulaufs angeordnet sind.

25. Vorrichtung nach Anspruch 24, **dadurch gekennzeichnet, dass** in einem Abschnitt (18) der Fluidzuleitung (7) der durch einen Fluidstrom bewegbare Drosselkörper (20) angeordnet ist, dessen Stellung durch die Sensoren (23a, 23b) erfassbar ist.

26. Vorrichtung nach Anspruch 25, **dadurch gekennzeichnet, dass** der Drosselkörper (20) aus einem metallischen Material und die Fluidzuleitung (7) im Bereich (18) des Drosselkörpers (20) aus einem nicht metallischen Material- besteht.

27. Vorrichtung nach wenigstens einem der Ansprüche 24 bis 26, **dadurch gekennzeichnet, dass** die Düse (4) während der Innenraumbehandlung in die mündung (2) der Flasche (1) eintaucht.

## Claims

1. Process or controlling the treating of the insides of bottles and suchlike with a fluid, whereby introduction of the fluid into the inner chamber occurs by means of a nozzle with an outlet, **characterized in that** the presence of the jet of fluid, in the area after the outlet, is controlled by means of a controlling device and/or the fluid supply to the outlet is controlled, with an associated controlling device, by means of a pressure-regulation valve that can move in the fluid supply conduit.

2. Process in accordance with claim 1, **characterized in that** control of the fluid jet and/or of the fluid supply conduit occurs free of contact with it.

3. Process in accordance with claims 1 or 2, **characterized in that**, on introduction of the fluid into the interior of the bottle or suchlike, the fluid is at a separation from the inner inlet and **in that** the presence of the liquid jet is controlled, preferably optically, particularly using a light beam, in this gap area.

4. Process in accordance with claim 3, **characterized in that** the light beam is directed, transversely in relation to the fluid jet, at an angle diverging at 90°.

5. Process in accordance with claims 1 or 2, **characterized in that** the fluid movement in the supply pipe before the outlet is determined by a pressure-regulating valve that is controlled such that it can move axially in the supply conduit, the position of the said pressure-regulation valve being controlled.

6. Process in accordance with at least one of the preceding claims 1 to 5, **characterized in that** the inside of a bottle or suchlike is subjected, several times during a treating cycle, to a liquid, particularly one of varying kind, and **in that**, with each introduction of liquid, the pressure of the jet of fluid and/or the supply of liquid is controlled.

7. Process in accordance with at least one of claims 1 to 6, **characterized in that** a signal is given out when the fluid jet and/or fluid supply conduit is absent from a control device.

8. Process in accordance with one of claims 1 to 7, **characterized in that** the bottles or suchlike to be treated on the inside are held by means of a inlet such that they point downwards, and the jet of liquid flows upwards into the inside space, from below.

9. Process in accordance with at least one of the preceding claims 1 to 8, **characterized in that** it is used in a rinser, particularly a continuously flowing one.

10. Process in accordance with at least one of the preceding claims, **characterized in that** the inside of the bottle or suchlike is sterilized by means of treatment with liquid.

11. Process in accordance with at least one of the preceding claims, **characterized in that** if the result of treatment is inadequate, the relevant bottle is not passed onto a subsequent filling process, particularly if the process is to occur under sterile or aseptic conditions, but is separated in advance of this filling process.

12. Device for controlling inside treatment of bottles (1) or suchlike, whereby the introduction of the liquid (6) occurs, in the inner space, by means of a nozzle (4) with an outlet (5), particularly for carrying out the process in accordance with at least one of the claims 1 to 4, **characterized in that** the presence of the jet of fluid (6) is monitored in the area after the outlet (5) and/or the supply of liquid to the outlet (5) is monitored by a controlling device (14, 22), by means of a pressure-regulation valve.

13. Device in accordance with claim 12, **characterized in that** monitoring occurs by means of non-contact sensors (16a, 16b, 23a, 23b).

14. Device in accordance with claim 13, **characterized in that** the sensors are light barriers (16a, 16b) and/or approximation initiators (32a, 23b).

15. Device in accordance with one of claims 12 to 14, **characterized in that** the bottles (1) can be continuously conveyed by means of a conveying device and **in that** the sensors (16a, 16b, 23a, 23b) are arranged such that they are stationary on the bottle conveyor belt (30).

16. Device in accordance with claim 15, **characterized in that** the control device (14, 22) carries out a signal-interrogation on the sensors (16a, 16b, 23a, 23b) when they pass through a bottle passing by and, where a flow of liquid or a supply of liquid is not present, gives out a fault signal.

17. Device in accordance with claim 16, **characterized in that** a bottle-rinsing device (35), for rinsing an untreated, or insufficiently treated bottle, can be controlled by means of a fault signal.

18. Device in accordance with claim 17, **characterized in that** the bottle-rinsing device (35) is disposed in the area in front of a filling machine (40), particularly a sterilized filling-machine.

19. Device in accordance with at least one of claims 15 to 18, **characterized in that** the bottles can be swivelled, from a vertical position from the conveying device (10, 11) for inside treatment, into a position with the opening (2) essentially downwards in which the opening (2) is concentric with an upwardly directed nozzle (4).

20. Device in accordance with claim 12 to 18, **characterized in that** the nozzle (4) and the opening (2) of a bottle (1) have an intermediate space between them during the inner treatment and **in that** the presence of the jet of fluid (6) can be detected by means of the at least one sensor, particularly by means of a beam (17) of light crossing the jet (6) of liquid.

21. Device in accordance with claim 20, **characterized in that** the sensors (16a, 16b) are arranged such that the light beam (17) crosses the jet of liquid (6) at an angle α of 90°, and transverse in relation to the conveying device.

22. Device in accordance with at least one of claims 12 to 21, **characterized in that** the sensors (16a, 16b) are arranged in or on a housing having two parallel and separated arms (30a, 30b) and **in that** the bottles can be guided between the arms.

23. Device in accordance with claim 22, **characterized in that** the housing (30) is essentially U-shaped and the arms (30a, 30b) are of different lengths.

24. Device in accordance with at least one of claims 12 to 19, **characterized in that** sensors are, in the area of the fluid supply conduit (7), arranged for detecting the fluid supply, on the path of movement of the nozzles (4).

25. Device in accordance with one of claims 24, **characterized in that**, in one section (18), the fluid supply conduit (7) is adjusted by means of a fluid flow, movable pressure-regulation valve (20), the position of which can be detected by the sensors (23a, 23b).

26. Device in accordance with claim 25, **characterized in that** the pressure-regulation valve (20) is made of a metal material and **in that** the fluid supply conduit (7) is made of a non-metal material in the area (18) of the pressure-regulation valve (20).

27. Device in accordance with at least one of claims 24 to 26, **characterized in that** the nozzle (4) dips into the opening (2) of the bottle (1) during the treating of the inside of the bottle (1).

## Revendications

1. Procédé pour contrôler le traitement de l'espace intérieur à l'aide d'un fluide pour des bouteilles (1) ou des objets comparables, selon lequel le fluide (6) est introduit dans l'espace intérieur (3) par l'intermédiaire d'une buse (4) munie d'une ouverture de sortie (5),
**caractérisé en ce que**
la présence d'un jet de fluide (6) dans la zone en aval de l'ouverture de sortie (5) est contrôlée à l'aide d'une installation de contrôle et/ou l'alimentation en fluide vers l'ouverture de sortie est contrôlée par une installation de contrôle (14, 22) associée grâce à un corps d'étranglement (20) mobile dans la conduite d'alimentation en fluide.

2. Procédé selon la revendication 1,
**caractérisé en ce que**
le jet de fluide (6) et/ou l'alimentation en fluide est contrôlé sans contact.

3. Procédé selon la revendication 1 ou 2,
**caractérisé en ce que**
lorsque le fluide (6) est introduit dans l'espace intérieur d'une bouteille (1) ou d'un objet comparable, l'ouverture de sortie (5) présente un écart par rapport à l'ouverture d'entrée de l'espace intérieur (3) et on contrôle dans la zone de cet écart qu'il y a un jet de fluide (6), de préférence par des moyens optiques, en particulier à l'aide d'un rayon lumineux (17).

4. Procédé selon la revendication 3,
**caractérisé en ce que**
le rayon lumineux (17) est dirigé transversalement au jet de fluide (6) en faisant un angle α différent de 90°.

5. Procédé selon la revendication 1 ou 2,
**caractérisé en ce que**
le déplacement du fluide dans la conduite d'alimentation (7) en amont de l'ouverture de sortie (5) est détecté par un corps d'étranglement (20) mobile et guidé axialement dans la conduite d'alimentatio (7) et la position du corps d'étranglement (20) est contrôlée.

6. Procédé selon au moins l'une des revendications précédentes 1 à 5,
**caractérisé en ce que**
pendant un cycle de traitement un fluide (6) est conduit plusieurs fois dans l'espace intérieur (3) d'une bouteille ou (1) d'un objet comparable, en particulier de différentes façons, et à chaque introduction du fluide (6) on contrôle qu'il y a un jet de fluide et/ou une alimentation en fluide.

7. Procédé selon au moins l'une des revendications 1 à 6,
**caractérisé en ce que**
un signal est émis par une installation de contrôle (14, 22) lorsque le jet de fluide et/ou l'alimentation en fluide manque.

8. Procédé selon au moins l'une des revendications 1 à 7,
**caractérisé en ce que**,
pour traiter l'espace intérieur (3), les bouteilles (1) ou objets comparables sont maintenues l'ouverture d'entrée dirigée vers le bas et le jet de fluide (6) s'écoule dans l'espace intérieur en étant dirigé de bas en haut.

9. Procédé selon au moins l'une des revendications précédentes 1 à 8,
**caractérisé en ce qu'**
on utilise un rinceur, en particulier d'un type qui tourne en continu.

10. Procédé selon au moins l'une des revendications précédentes 1 à 9,
**caractérisé en ce que**
l'espace intérieur (3) d'une bouteille (1) ou d'un objet comparable est stérilisé par le traitement à l'aide du fluide (6).

11. Procédé selon au moins l'une des revendications précédentes 1 à 10,
**caractérisé en ce que**
si le contrôle du traitement de l'espace intérieur (3) dans une bouteille (1) ou un objet comparable montre que le traitement est insuffisant, la bouteille correspondante n'est pas acheminée à une opération ultérieure de remplissage, en particulier si l'opération de remplissage doit avoir lieu dans des conditions stériles ou aseptiques, mais elle est éliminée auparavant.

12. Dispositif pour contrôler le traitement de l'espace intérieur (3) à l'aide d'un fluide pour des bouteilles (1) ou des objets comparables, selon lequel le fluide (6) est introduit dans l'espace intérieur (3) par l'intermédiaire d'une buse (4) munie d'une ouverture de sortie (5), en particulier pour exécuter le procédé selon au moins l'une des revendications précédentes 1 à 11,
**caractérisé en ce que**
la présence du jet de fluide (6) est surveillée dans la zone en aval de l'ouverture de sortie (5) et/ou grâce à un corps d'étranglement (20) l'alimentation en fluide vers l'ouverture de sortie (5) est surveillée par une installation de contrôle (14, 22).

13. Dispositif selon la revendication 12,
**caractérisé en ce que**
la surveillance est réalisée par des capteurs (16a, 16b, 23a, 23b) qui fonctionnent sans contact.

14. Dispositif selon la revendication 13,
**caractérisé en ce que**
les capteurs sont des barrières lumineuses (16a, 16b) et/ou des déclencheurs d'approche (23a, 23b).

15. Dispositif selon l'une des revendications précédentes 12 à 14,
**caractérisé en ce que**
les bouteilles (1) peuvent être transportées en continu à l'aide d'un dispositif de transport (10, 11) et
les capteurs (16a, 16b, 23a, 23b) sont fixes sur la voie de transport (30) des bouteilles.

16. Dispositif selon la revendication 15,
**caractérisé en ce que**
l'installation de contrôle (14, 22) interroge les signaux des capteurs lorsque les capteurs (16a, 16b, 23a, 23b) traversent une bouteille (1) qui passe et elle émet un signal d'erreur lorsqu'un jet de fluide (6) ou une alimentation en fluide manque.

17. Dispositif selon la revendication 16,
**caractérisé en ce que**
un dispositif d'élimination des bouteilles (35), chargé d'éliminer une bouteille (1) qui n'est pas traitée ou ne l'est pas suffisamment, peut être commandé par le signal d'erreur.

18. Dispositif selon la revendication 17,
**caractérisé en ce que**
le dispositif d'élimination des bouteilles (35) est placé dans la zone en amont d'une machine de remplissage (40), en particulier d'une machine de remplissage stérile.

19. Dispositif selon au moins l'une des revendications 15 à 18,
**caractérisé en ce que**
pour traiter l'espace intérieur (3) le dispositif de transport (10, 11) peut faire pivoter les bouteilles depuis une position verticale jusque dans une position où l'orifice (2) est pratiquement orienté vers le bas et où l'orifice (2) se trouve au centre d'une buse (4) dirigée vers le haut.

20. Dispositif selon au moins l'une des revendications 12 à 19,
**caractérisé en ce que**
pendant que l'espace intérieur (3) est traité, la buse (4) et l'orifice (2) d'une bouteille (1) présentent un intervalle et
dans la zone de l'intervalle il est possible de détecter la présence du jet de fluide (6) par l'au moins un capteur (16a, 16b), en particulier par un rayon lumineux (17) qui croise le jet de fluide (6).

21. Dispositif selon la revendication 20,
**caractérisé en ce que**
les capteurs (16a, 16b) sont disposés de telle manière que le rayon lumineux (17) croise le jet de fluide (6) transversalement à la direction de transport en faisant un angle α différent de 90°.

22. Dispositif selon au moins l'une des revendications 12 à 21,
**caractérisé en ce que**
les capteurs (16a, 16b) sont placés dans ou sur un boîtier (30) dont les montants (30a, 30b) sont parallèles et à distance l'un de l'autre et
les bouteilles (1) peuvent passer entre les montants.

23. Dispositif selon la revendication 22,
**caractérisé en ce que**
le boîtier (30) a une forme pratiquement en U et
les montants (30a, 30b) ont une longueur différente.

24. Dispositif selon au moins l'une des revendications 12 à 19,
**caractérisé en ce que**
des capteurs (23a, 23b) pour détecter l'alimentation en fluide (6) sont placés sur le trajet où se déplacent les buses (4) dans la zone de leur conduite d'alimentation en fluide (7).

25. Dispositif selon la revendication 24,
**caractérisé en ce que**
le corps d'étranglement (20) que le courant de fluide (6) peut déplacer est disposé dans un segment (18) de la conduite d'alimentation en fluide (7) et la position du corps d'étranglement (20) peut être détectée par les capteurs (23a, 23b).

26. Dispositif selon la revendication 25,
**caractérisé en ce que**
le corps d'étranglement (20) est en un matériau métallique et la conduite d'alimentation en fluide (7) dans la zone (18) du corps d'étranglement (20) en un matériau non métallique.

27. Dispositif selon au moins l'une des revendications 24 à 26,
**caractérisé en ce que**
la buse (4) plonge dans l'orifice (2) de la bouteille (1) pendant que l'espace intérieur (3) est traité.
